# EUROPÄISCHE PATENTSCHRIFT

(11) **EP 0 712 919 B1**
(45) Veröffentlichungstag und Bekanntmachung des Hinweises auf die Patenterteilung: **06.05.1998**
(21) Anmeldenummer: 95116469.8
(22) Anmeldetag: 19.10.1995
(51) Int. Cl.: C09K 21/02, C09D 1/02, B32B 17/10

(54) **Verwendung von synthetischen Silikaten in Brandschutzgläsern**
The use of synthetic silicates for fire-proof glasses
Utilisation de silicates synthétiques dans les verres ignifuges

(30) Priorität: 17.11.1994 DE 4440794
(43) Veröffentlichungstag der Anmeldung: 22.05.1996
(73) Patentinhaber: Clariant GmbH, 65929 Frankfurt am Main (DE)
(72) Erfinder: Bauer, Harald, Dr., D-50170 Kerpen (DE); Pirig, Wolf-Dieter, D-53879 Euskirchen (DE); Thewes, Volker, D-50354 Hürth (DE)

(56) Entgegenhaltungen:
- EP-A- 0 115 398
- DE-A- 2 414 574
- DE-A- 2 423 197
- DE-A- 3 446 202
- GB-A- 2 172 883
- US-A- 3 793 058
- DATABASE WPI Section Ch, Week 7920 Derwent Publications Ltd., London, GB; Class A82, AN 79-37820B XP002000082 & JP-A-54 043 941 (GOSEI KK ET AL) , 6.April 1979

## Beschreibung

Die Erfindung betrifft die Verwendung von quellfähigen synthetischen Silikaten in Brandschutzgläsern, ein Verfahren zur Herstellung solcher Brandschutzgläser und Brandschutzgläser, die solche Silikate enthalten.

Elemente zur Brandschutzverglasung bestehen im allgemeinen aus mehreren, hintereinander angeordneten Glasscheiben, deren Zwischenräume mit einer flammhemmenden Schicht ("Brandschutzmasse"), beispielsweise einer Silikatmasse, gefüllt sind. Im Falle eines Brandes springt die der Brandseite zugewandte Glasscheibe, die Silikatmasse wird erhitzt und bläht sich infolge von Wasserverdampfung zu einem grobporigen Schaum auf. Dieser Schaum hält die bei einem Scheibenbruch entstehenden Glassplitter fest und verschmilzt allmählich mit den Glassplittern.

Bei einem länger anhaltenden Brand wiederholt sich der obige Vorgang an mehreren hintereinander angeordneten, jeweils mit einer flammhemmenden Masse gefüllten Scheiben. Auf diese Weise bleibt das gesamte Fensterelement in der Form erhalten und verhindert somit eine Ausbreitung des Brandes.

Im Stand der Technik sind eine Reihe von Verfahren zur Herstellung von Brandschutzmassen sowie die Eigenschaften solcher Brandschutzmassen enthalten.

Die DE-A- 40 20 459 beschreibt ein Verfahren zur Herstellung einer optisch klaren Brandschutz-Glasscheibe, wobei eine Brandschutz-Vormasse aus Aluminiumphosphat, Acrylsäurederivaten, einem Photohärter und Wasser in dünnflüssiger Form in einen Zwischenraum zwischen zwei Scheiben oder auf eine Glasscheibe aufgegossen wird.
Diese Brandschutz-Vormasse wird dann durch Bestrahlen mit ultraviolettem Licht in die eigentliche Brandschutzmasse umgewandelt.

Nach anderen aus dem Stand der Technik bekannten Verfahren werden Aluminiumphosphat-haltige Lösungen auf eine Glasscheibe aufgebracht und an der Luft, gegebenenfalls unter Einwirkung von Wärme, auf einen bestimmten Feuchtigkeitsgehalt getrocknet, wobei man eine Brandschutzmasse erhält.

Die EP-A-306 677 beschreibt ein Verfahren zur Herstellung einer im Brandfall aufgeschäumten Brandschutzmasse für feuerabschirmende Verglasungen, insbesondere für feuerabschirmende Verglasungen aus zumindest zwei Glasscheiben und zumindest einem Scheibenzwischenraum, in dem die Brandschutzmasse angeordnet ist, wobei ein wasserunlösliches Aluminiumsalz, eine anorganische Säure und eine Wassermenge zusammengebracht und zur Brandschutzmasse umgesetzt werden. Die hergestellte Brandschutzmasse enthält hydratisiertes Metallsalz. Die so aufgebrachte Schicht wird über einen längeren Zeitraum bei erhöhter Temperatur getrocknet.

Schließlich beschreibt die DE-A-34 46 202 ein Verfahren zur Herstellung einer lichtdurchlässigen, festen Brandschutzschicht aus einem blähbaren Material, wobei auf ein Substrat (z.B. auf eine Glasscheibe) eine Schicht aus einem in Wasser gelösten hydratisierten Alkalimetallsilikat, die einen Hilfsstoff aufweisen kann, aufgebracht wird und wobei diese Schicht erwärmt sowie dabei in einer Trocknungskammer und mit einer Trocknungsatmosphäre, die Wasserdampf enthält und Helium enthalten kann sowie im Kreislauf geführt wird, bei einer Temperatur von etwa 100 °C getrocknet wird.

Die Trocknungsatmosphäre kan.n dabei verschiedenartig zusammengesetzt sein.

Die vorgenannten Verfahren weisen jedoch den Nachteil auf, daß sich die jeweilige Brandschutzmasse nur auf komplizierte Art und Weise auf die notwendige Viskosität und Transparenz einstellen läßt. Insbesondere bereitet es erhebliche Mühe, solche Brandschutzmassen oder -schichten herzustellen, die frei von Blasen sind, welche zu erheblichen Einbußen bezüglich der Transparenz führen können.

Es war daher Aufgabe der vorliegenden Erfindung, eine flammhemmende Komponente zur Verfügung zu stellen, die die vorgenannten Nachteile nicht aufweist und mit der Brandschutzgläser erhalten werden können, die einen entsprechenden flammhemmenden Effekt aufweisen.

Gegenstand der Erfindung ist daher die Verwendung von quellfähigen, synthetischen Schichtsilikaten des Saponit- und/oder Hectorit-Typs als flammhemmende Komponente in Brandschutzgläsern.

Bevorzugt wird quellfähiges, synthetisches Schichtsilikat in wäßriger Lösung verwendet.

Üblicherweise erfolgt die Verwendung des Schichtsilikats zusammen mit üblichen Zusätzen, wie Salzen und nicht-kristallinen Silikaten.

Die Aufgabe wird auch gelöst durch ein Verfahren zur Herstellung eines Brandschutzglases, welches dadurch gekennzeichnet ist, daß quellfähige, synthetische Schichtsilikate des Saponit- und/oder Hectorit-Typs zwischen mindestens zwei Gläsern eingebracht werden.

Bevorzugt werden die quellfähigen, synthetischen Schichtsilikate in Form ihrer wäßrigen Lösungen eingebracht.

Bevorzugt enthält die Lösung 0,1 bis 30, besonders bevorzugt 3 bis 25 Gew.-% an quellfähigem, synthetischem Schichtsilikat.

Zusätzlich kann die Lösung 0 bis 18 Gew.-% Salze und 0 bis 35 Gew.-% wäßrige Natriumsilikatlösung (bezogen auf den Feststoffgehalt) enthalten. Unter Salze im Sinne der Erfindung sind Sulfate, Chloride, Fluoride, Nitrate, Carbonate, Hydrogencarbonate, Phosphate, Polyphosphate sowie Hydroxide von Lithium, Kalium, Natrium, Ammonium und Magnesium zu verstehen. Zusätzlich können auch nicht-kristalline Silikate enthalten sein.

In Ausgestaltung der Erfindung wird die Lösung in einer Dicke von 1 bis 30, bevorzugt 2 bis 15 mm, zwischen mindestens zwei Gläsern eingebracht. Im allgemeinen wird dazu die Lösung in der vorgenannten Dicke auf eine Scheibe aufgebracht und verteilt und anschließend eine weitere Scheibe aufgebracht.

Gegenstand der Erfindung ist ebenfalls eine Brandschutzscheibe, bestehend aus mindestens zwei Glasscheiben mit einer dazwischen befindlichen flammhemmenden Schicht, wobei die flammhemmende Schicht quellfähige, synthetische Schichtsilikate des Saponit- und/oder Hectorit-Typs enthält.

Die Dicke der flammhemmenden Schicht beträgt zwischen 1 und 30, bevorzugt zwischen 2 und 15 mm.

Die Dicke der flammhemmenden Schicht in der Brandschutzscheibe wird so bemessen, daß die Brandschutznorm der DIN 4102 (Teile 2, 5, 13) erfüllt wird. Insbesondere bei Mehrschichtgläsern werden hohe Feuerwiderstandsklassen erreicht.

Die Erfindung wird durch die nachstehenden Beispiele erläutert.

### Beispiel 1

Ein synthetischer Hectorit (Typ: SKS-21, Hersteller: Hoechst AG, Frankurt/Main) wurde in Form seiner wäßrigen Lösung (Hectoritgehalt: 12 Gew.-%) auf eine Glasscheibe gegossen und gleichmäßig verteilt, anschließend wurde eine weitere Glasscheibe aufgelegt. Die Dicke der hectorithaltigen Schicht betrug 15 mm.

### Beispiel 2

Eine 4 gew.-%ige hectorithaltige Lösung wurde auf eine Glasplatte gegossen und gleichmäßig verteilt. Dieser Vorgang wurde bei einer weiteren Glasplatte wiederholt und die Glasplatten so aufeinandergelegt, daß man durch Abdeckung mit einer dritten Glasplatte ein Zweischichtenglas erhielt. Die Dicke der Schichten betrug ca. 10 mm.

Die Gläser wurden anschließend auf ihre Brandschutzfähigkeit gemäß DIN 4102 hin geprüft.

Die obigen Brandschutzgläser der Beispiele 1 und 2 erreichen nach DIN 4102 (Teile 2, 5, 13) mindestens die Feuerwiderstandsklasse G 30 bzw. die Feuerwiderstandsklasse F 30.

## Patentansprüche

1. Verwendung von quellfähigen, synthetischen Schichtsilikaten des Saponit- und/oder Hectorit-Typs als flammhemmende Komponente in Brandschutzgläsern.

2. Verwendung nach Anspruch 1, dadurch gekennzeichnet, daß das quellfähige, synthetische Schichtsilikat in wäßriger Lösung verwendet wird.

3. Verwendung nach Anspruch 1 oder 2, dadurch gekennzeichnet, daß das Schichtsilikat zusammen mit üblichen Zusätzen, wie Salzen und nicht-kristallinen Silikaten, verwendet wird.

4. Verfahren zur Herstellung eines Brandschutzglases, dadurch gekennzeichnet, daß quellfähige, synthetische Schichtsilikate des Saponit- und/oder Hectorit-Typs zwischen mindestens zwei Gläsern eingebracht werden.

5. Verfahren nach Anspruch 4, dadurch gekennzeichnet, daß quellfähige, synthetische Schichtsilikate in Form ihrer wäßrigen Lösung eingebracht werden.

6. Verfahren nach Anspruch 4 oder 5, dadurch gekennzeichnet, daß die Lösung 0,1 bis 30, bevorzugt 3 bis 25 Gew.-% Hectorit enthält.

7. Verfahren nach mindestens einem der Ansprüche 4 bis 6, dadurch gekennzeichnet, daß die Lösung zusätzlich 0 bis 18 Gew.-% Salze und 0 bis 35 Gew.-% wäßrige Natriumsilikatlösung (bezogen auf den Feststoffgehalt) enthält.

8. Verfahren nach mindestens einem der Ansprüche 4 bis 7, dadurch gekennzeichnet, daß die Lösung in einer Dicke von 1 bis 30, bevorzugt 2 bis 15 mm zwischen mindestens zwei Gläsern eingebracht wird.

9. Brandschutzscheibe, bestehend aus mindestens zwei Glasscheiben mit einer dazwischen befindlichen flammhemmenden Schicht, dadurch gekennzeichnet, daß die flammhemmende Schicht quellfähige, synthetische Schichtsilikate des Saponit- und/oder Hectorit-Typs enthält.

10. Brandschutzscheibe nach Anspruch 9, dadurch gekennzeichnet, daß die Dicke der flammhemmenden Schicht 1 bis 30, bevorzugt 2 bis 15 mm beträgt.

11. Brandschutzscheibe nach Anspruch 9 oder 10, dadurch gekennzeichnet, daß die Dicke der flammhemmenden Schicht so bemessen ist, daß die Brandschutznorm der DIN 4102 (Teile 2, 5, 13) erfüllt wird.

## Claims

1. The use of swellable, synthetic phyllosilicates of the saponite and/or hectorite type as flame-inhibiting component in fire-resistant glasses.

2. The use as claimed in claim 1, wherein the swellable, synthetic phyllosilicate is used in aqueous solution.

3. The use as claimed in claim 1 or 2, wherein the phyllosilicate is used together with conventional additives, such as salts and noncrystalline silicates.

4. A process for the production of a fire-resistant glass, which comprises introducing swellable, synthetic phyllosilicates of the saponite and/or hectorite type between at least two glasses.

5. The process as claimed in claim 4, wherein swellable, synthetic phyllosilicates are introduced in the form of their aqueous solution.

6. The process as claimed in claim 4 or 5, wherein the solution contains from 0.1 to 30% by weight, preferably from 3 to 25% by weight, of hectorite.

7. The process as claimed in at least one of claims 4 to 6, wherein the solution additionally contains from 0 to 18% by weight of salts and from 0 to 35% by weight of aqueous sodium silicate solution (based on the solids content).

8. The process as claimed in at least one of claims 4 to 7, wherein the solution is introduced in a thickness of from 1 to 30 mm, preferably from 2 to 15 mm, between at least two glasses.

9. A fire-resistant pane comprising at least two glass panes with a flame-inhibiting layer in between, wherein the flame-inhibiting layer contains swellable, synthetic phyllosilicates of the saponite and/or hectorite type.

10. A fire-resistant pane as claimed in claim 9, wherein the thickness of the flame-inhibiting layer is from 1 to 30 mm, preferably from 2 to 15 mm.

11. A fire-resistant pane as claimed in claim 9 or 10, wherein the thickness of the flame-inhibiting layer is set so that the DIN 4102 (Parts 2, 5 and 13) fire-protection standard is satisfied.

## Revendications

1. Utilisation de silicates feuilletées synthétiques susceptibles de gonflement de type saponite et/ou hectorite comme composant retardateur de combustion dans des verres ignifuges.

2. Utilisation selon la revendication 1, caractérisée en ce que l'on utilise le silicate feuilleté synthétique susceptible de gonflement en solution aqueuse.

3. Utilisation selon la revendication 1 ou 2, caractérisé en ce que l'on utilise le silicate feuilleté en même temps que des additifs courants tels que des sels et des silicates non cristallins.

4. Procédé de fabrication d'un verre ignifuge, caractérisé en ce que des silicates feuilletés synthétiques susceptibles de gonflement de type saponite et/ou hectorite sont introduits entre au moins deux verres.

5. Procédé selon la revendication 4, caractérisé en ce que des silicates feuilletés synthétiques susceptibles de gonflement sont introduits sous forme de leur solution aqueuse.

6. Procédé selon la revendication 4 ou 5, caractérisé en ce que la solution contient 0,1 à 30, de préférence 3 à 25 % en masse d'hectorite.

7. Procédé selon au moins l'une des revendications 4 à 6, caractérisé en ce que la solution contient en outre 0 à 18 % en masse de sels et 0 à 35 % en masse de solution aqueuse de silicate de sodium (par rapport à la teneur en solide).

8. Procédé selon au moins l'une des revendications 4 à 7, caractérisé en ce que la solution est introduite en une épaisseur de 1 à 30, de préférence de 2 à 15 mm, entre au moins deux verres.

9. Vitrage ignifuge consistant en au moins deux vitres avec une couche retardatrice de combustion située entre elles, caractérisé en ce que la couche retardatrice de combustion contient des silicates feuilletés synthétiques susceptibles de gonflement de type saponite et/ou hectorite.

10. Vitrage ignifuge selon la revendication 9, caractérisé en ce que l'épaisseur de la couche retardatrice de combustion est de 1 à 30, de préférence de 2 à 15 mm.

11. Vitrage ignifuge selon la revendication 9 ou 10, caractérisé en ce que l'épaisseur de la couche retardatrice de combustion est ajustée de telle manière que la norme d'ignifugation DIN 4102 (parties 2, 5, 13) est respectée.
